# EUROPEAN PATENT APPLICATION

(11) **EP 1 367 580 A2**
(43) Date of publication of application: **03.12.2003**
(21) Application number: 03252830.9
(22) Date of filing: 06.05.2003
(51) Int. Cl.: G11B 19/12, G11B 31/00

(54) **Reproduction display apparatus and reproduction display method.**

(30) Priority: 30.05.2002 JP 2002156624
(71) Applicant: Pioneer Corporation, Meguro-ku, Tokyo (JP)
(72) Inventor: Endo, Fumio, c/o Pioneer Corporation, Kawagoe-shi, Saitama (JP); Morimoto, Mitsutoshi, c/o Pioneer Corporation, Kawagoe-shi, Saitama (JP); Watanabe, Hideo, c/o Pioneer Corporation, Kawagoe-shi, Saitama (JP); Watanabe, Koji, c/o Pioneer Corporation, Kawagoe-shi, Saitama (JP)
(74) Representative: Haley, Stephen

(57) **Abstract**

A reproduction and display method for a reproduction and display apparatus having a display device that displays video information and a reproduction device that reproduces a recording medium on which at least video information to be displayed on the display device is recorded. The method includes judging whether or not a recording medium loaded on the reproduction device is a recording medium on which video information is recorded, activating the display device that is not in an activated state, when it is judged that the recording medium is a recording medium on which video information is recorded, and displaying the video information recorded on the recording medium, on the activated display device.

## Description

The present disclosure relates to the subject matter contained in Japanese Patent Application No. 2002-156624 filed May 30, 2002, which is incorporated herein by reference in its entirety.

The present invention relates to a reproduction display apparatus configured by a display device that displays video information, and a reproduction device that reproduces a recording medium on which the video information is recorded.

For example, a conventional reproduction display apparatus is mounted in the vicinity of a driver's seat of a vehicle that is a mobile unit. The reproduction display apparatus comprises a multimedia player that can reproduce a recording medium on which video information is recorded (for example, a DVD (Digital Versatile Disc)-Video or a Video-CD), and also a recording medium on which only information other than video information is recorded (for example, a CD-DA (Compact Disc-Digital Audio)); and a monitor that displays video information which is reproduced by the multimedia player.

As such a monitor, for example, an in-vehicle monitor is known which is housed in a casing disposed in a dashboard of a vehicle, and which is held so as to be movable and retractable with respect to the casing. When the monitor is to be used, the monitor is moved to the outside of the casing, and, when the monitor is not to be used, the monitor is housed into the casing.

In the above-described conventional reproduction display apparatus, when a recording medium is loaded on the multimedia player, the monitor housed in the casing is automatically moved to the outside of the casing. Namely, an operation of inputting a command to move the monitor to the outside of the casing is omitted so as to improve convenience. In the conventional reproduction display apparatus, the movement of the monitor to the outside of the casing is performed simply by using the loading of a recording medium as a trigger. Therefore, the monitor is moved even when a recording medium on which video information to be displayed on the monitor is not recorded is loaded. Namely, even in the case where the user inserts a recording medium such as a CD, i.e., a recording medium which does not require the use of the monitor into the multimedia player in order to reproduce it, the monitor housed in the casing is automatically moved to the outside of the casing. As a result, there arises a problem in that a cumbersome operation of housing the monitor, which has been once moved to the outside of the casing, into the casing must be performed.

The invention has been devised in order to solve at least the above-described problem. It is an object of the invention to provide a reproduction display apparatus and a reproduction display method in which activation of a display device is controlled in accordance with kinds of a recording medium loaded on a reproduction device.

In order to attain the object, a first aspect of the invention provides a reproduction display apparatus having: a display device that displays video information; a reproduction device that reproduces a recording medium on which at least video information to be displayed on the display device is recorded; and a control section which, when it is judged that a recording medium loaded on the reproduction device is a recording medium on which such video information is recorded, activates the display device that is not in an activated state.

A second aspect of the invention provides a reproduction display apparatus having: a display device that is disposed to be movable inside and outside a case fixed to a vehicle; a reproduction device that reproduces a recording medium on which at least video information to be displayed on the display device is recorded; a moving section which moves the display device to inside and outside of the case; and a control section which, when it is judged that a recording medium loaded on the reproduction device is a recording medium on which such video information is recorded, controls the moving section to move the display device that is housed in the case to outside of the case.

Another aspect of the invention provides a reproduction display method for a reproduction display apparatus having a display device that displays video information; and a reproduction device that reproduces a recording medium on which at least video information to be displayed on the display device is recorded, the method including: judging whether or not a recording medium loaded on the reproduction device is a recording medium on which video information is recorded; activating the display device that is not in an activated state, when it is judged that the recording medium is a recording medium on which video information is recorded; and displaying the video information recorded on the recording medium, on the activated display device.

A further aspect of the invention provides a reproduction display method for a reproduction display apparatus having a display device that is disposed to be movable inside and outside a case fixed to a vehicle; and a reproduction device that reproduces a recording medium on which at least video information to be displayed on the display device is recorded, the method including: judging whether or not a recording medium loaded on the reproduction device is a recording medium on which video information is recorded; moving the display device that is housed in the case, to outside of the case, when it is judged that the recording medium is a recording medium on which video information is recorded; and displaying the video information recorded on the recording medium, on the moved display device.
Fig. 1 is an external view showing a reproduction display apparatus of an embodiment of the invention;
Fig. 2 is a block diagram showing a configuration of a control system of the reproduction display apparatus;
Fig. 3 is a flowchart showing an operation of the control system of the reproduction display apparatus;
Fig. 4 is another flowchart (1/2) showing an operation of the control system of the reproduction display apparatus; and
Fig. 5 is a further flowchart (2/2) showing the operation of the control system of the reproduction display apparatus.

Hereinafter, an embodiment of a reproduction display apparatus of the invention will be described with reference to the accompanying drawings. An in-vehicle reproduction display apparatus having a reproduction device which can reproduce recording media of a DVD and a CD, particularly a reproduction device that can reproduce a DVD-Video, a DVD-Audio, and a Video-CD as recording media on which video information is recorded; and a display device that is held so as to be movable and retractable with respect to a casing will be described as one embodiment.

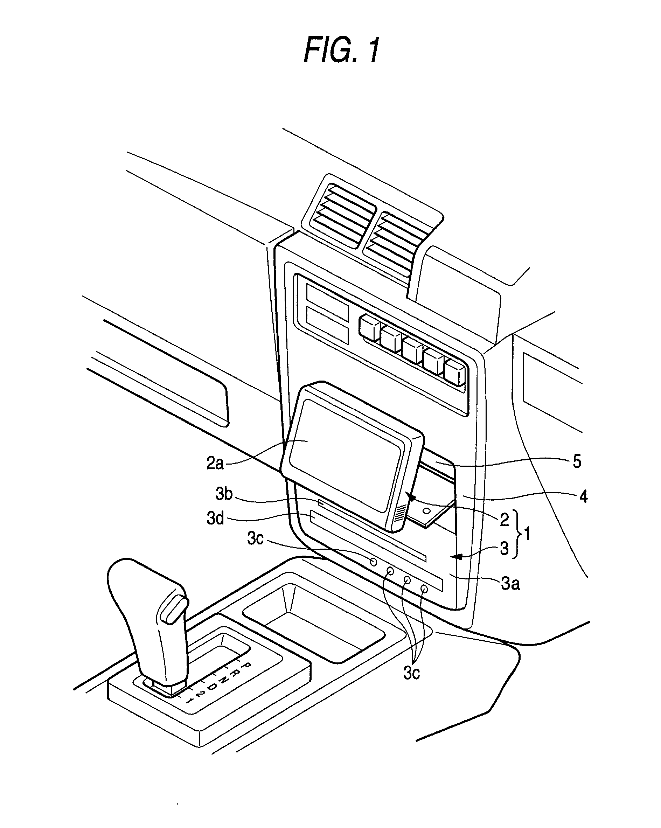

Fig. 1 is an external view showing the appearance of the in-vehicle reproduction display apparatus of the embodiment. The in-vehicle reproduction display apparatus 1 shown in Fig. 1 is configured by a monitor 2 that is a display device disposed in a dashboard 4 which is positioned between a driver's seat of a vehicle and a passenger's seat; and a multimedia player 3 that is a reproduction device. The monitor 2 has a display screen 2a on which video information is to be displayed, and is held so as to be movable and retractable in inward and outward directions with respect to a casing 5 which is embedded into the dashboard 4.

The monitor 2 is reciprocally moved by a moving mechanism configured by a driving motor and the like which are disposed in the casing 5. The monitor 2 is moved inside and outside the casing 5 by the moving mechanism while the display screen 2a is downward directed. When the monitor 2 is to be moved from the inside of the casing 5 to the outside thereof, the monitor is moved while the display screen 2a is downward directed, and then turned so that the display screen 2a is directed in the movement direction. Fig. 1 shows a state where the monitor 2 is moved outside the casing and the display screen 2a is then turned so as to be directed in the movement direction. In the following description, this state is referred to as "raised state".

The multimedia player 3 has an operation panel 3a. In the operation panel 3a, disposed are an insertion slot 3b through which a recording medium such as a DVD or a CD is to be inserted, various operation buttons 3c such as an eject button for ejecting a recording medium loaded on the multimedia player 3, to the outside of the multimedia player 3 through the insertion slot 3b, and a display unit 3d which displays information that indicating the progress of reproduction of the recording medium and the like.

The multimedia player 3 is provided with a transport mechanism which transports the recording medium inserted through the insertion slot 3b to a predetermined reproduction position, and which comprises a transport motor and the like; and a reproduction mechanism onwhich the recordingmediumtransported to the predetermined reproduction position by the transport mechanism is to be loaded, and which reads and reproduces information recorded on the recording medium.

The reproduction mechanism can reproduce many kinds of media including a recording medium such as a DVD on which video information is recorded, and a CD on which audio information is recorded. The video information which is read by the reproduction mechanism is displayed on the display screen 2a of the monitor 2.

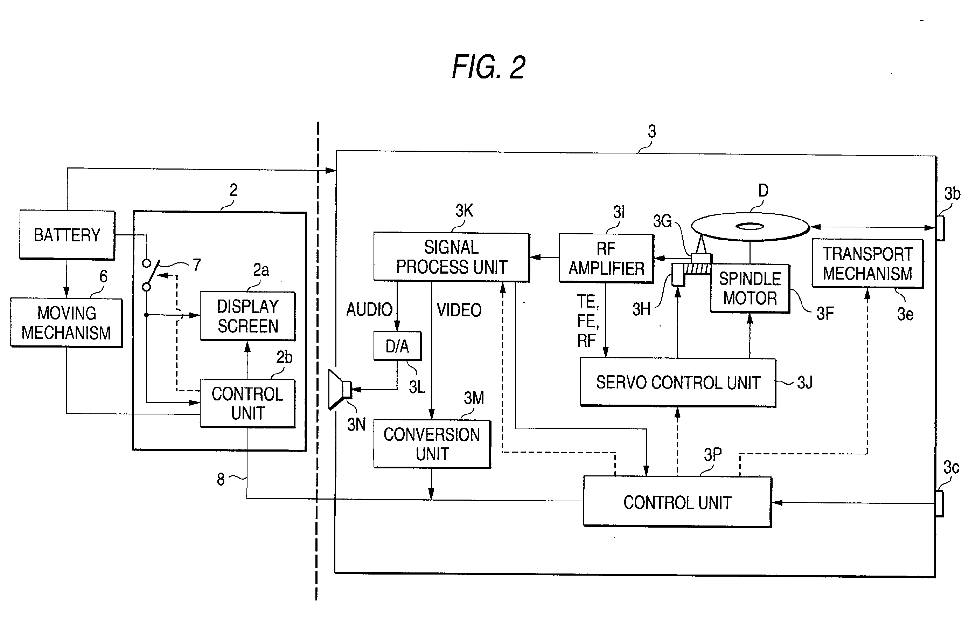

Next, the configuration of the in-vehicle reproduction display apparatus 1 of the embodiment will be described in detail with reference to the block diagram of Fig. 2. First, the configuration of the monitor 2 of the in-vehicle reproduction display apparatus 1 will be described. The monitor 2 is roughly divided into the display screen 2a, and a control unit 2b which conducts the control of the whole monitor 2.

The display screen 2a is configured by a liquid crystal display device and the like, and displays a video signal which has been converted by the multimedia player 3 as video data to be displayed on the display screen 2a. The control unit 2b performs a role of conducting the control of the whole monitor 2, and also performs a role of conducting the operation control of the moving mechanism 6. For example, the control unit 2b conducts processes such as switching over an image to be displayed on the display screen 2a, and operating the moving mechanism 6 on the basis of a signal which is supplied from the multimedia player 3 through a communication line 8.

The monitor 2 has a power switch 7. A power source voltage is supplied from a battery of the vehicle through the power switch 7, thereby setting the monitor 2 to an activated state. The power switch 7 is turned on/off under the control of the control unit 2b.

Next, the configuration of the multimedia player 3 of the in-vehicle reproduction display apparatus 1 will be described. The multimedia player 3 comprises the transport mechanism 3e which is configured by transport rollers and the like, and which transports a recording medium D inserted through the insertion slot 3b; a detection unit for detecting that the recording medium D transported by the transport mechanism 3e is held by a clamper and a turntable which are not shown, and which brings the recording medium D to the predetermined reproduction position. The detection unit also detects that the holding is cancelled. The detection unit is configured by mechanical switches and the like. The multimedia player 3 further comprises a spindle motor 3F which rotates at a constant linear velocity the recording medium D that is brought to the predetermined reproduction position; and a pickup 3G which reads information recorded on the recording medium D.

The pickup 3G has an LD (Laser Diode) (not shown) which emits laser beams of different wavelengths in accordance with the kind of the recording medium D brought to the predetermined reproduction position; an objective lens (not shown) which converges the laser beam emitted from the LD to irradiate an information recording plane of the recording medium; and an actuator (not shown) which drives the objective lens in tracking and focusing directions. The pickup reads information recorded on the recording medium D, by means of the laser beam emitted from the LD.

The multimedia player 3 further comprises a carriage mechanism having a carriage motor 3H which moves the pickup 3G in a radial direction of the recording medium D brought to the predetermined reproduction position; a servo control unit 3J having an RF amplifier 3I that amplifies a signal read by the pickup 3G, the servo control unit 3J conducting various servo controls such as a tracking servo control, a focus servo control, a carriage servo control, and a spindle servo control, in accordance with a tracking error signal TE, a focus error signal FE, and a reproduction signal RF that are supplied from the RF amplifier 3I; and a signal process unit 3K which applies signal processes such as a predetermined error correction process and a signal demodulation process (in the case of video information, an MPEG demodulation process) on the reproduction signal RF that is supplied from the RF amplifier 3I, and which separates the reproduction signal RF into a video signal and an audio signal.

The multimedia player 3 further comprises a D/A conversion unit 3L which converts the audio signal that is separated by the signal process unit 3K, into analog data; a loudspeaker 3N which amplifies the analog audio signal that is converted by the D/A conversion unit 3L, and which outputs the amplified audio signal; and a video conversion unit 3M which decodes the video signal that is separated by the signal process unit 3K, and which converts the decoded signal into video data to be displayed on the display screen 2a of the monitor 2.

The video data which have been converted by the video conversion unit 3M are supplied to the display screen 2a through the communication line 8 via the control unit 2b of the monitor 2, and then displayed as an image on the screen. A control unit 3P plays a role of conducting the control of the whole multimedia player 3 . The control unit controls the servo control unit and the transport mechanism on the basis of an operation signal which is supplied, for example, in response to an operation of the operation buttons 3c disposed on the operation panel 3a.

The control unit 3P supplies a signal indicative of the kind of the recording medium D brought to the predetermined reproduction position, to the control unit 2b of the monitor 2 through the communication line 8. The control unit has an internal memory that stores a signal when the signal is a signal indicative of a recording medium on which at least video information to be displayed on the display screen 2a of the monitor 2 is recorded. Furthermore, the control unit comprises a timer which measures a predetermined time elapsed after the loading of the recording medium is cancelled (for example, after the eject button is operated) . When the signal indicative of a recording medium on which at least video information to be displayed on the display screen 2a of the monitor 2 is recorded is not again obtained during the measurement by the timer, the signal stored in the internal memory is cleared after the measurement of the predetermined time by the timer is ended. The clamper, the turntable, the pickup 3G, the spindle motor 3F, the carriage mechanism, the servo control unit 3J, the RF amplifier 3I, the signal process unit 3K, the control unit 3P, the video conversion unit 3M, the D/A conversion unit 3L, and the loudspeaker 3N constitute the reproduction mechanism.

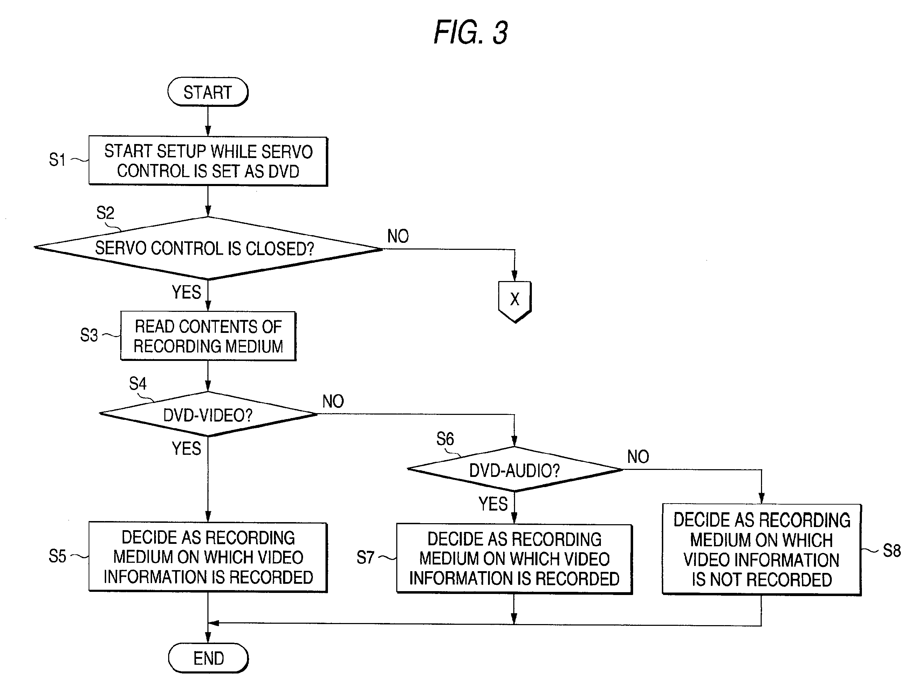

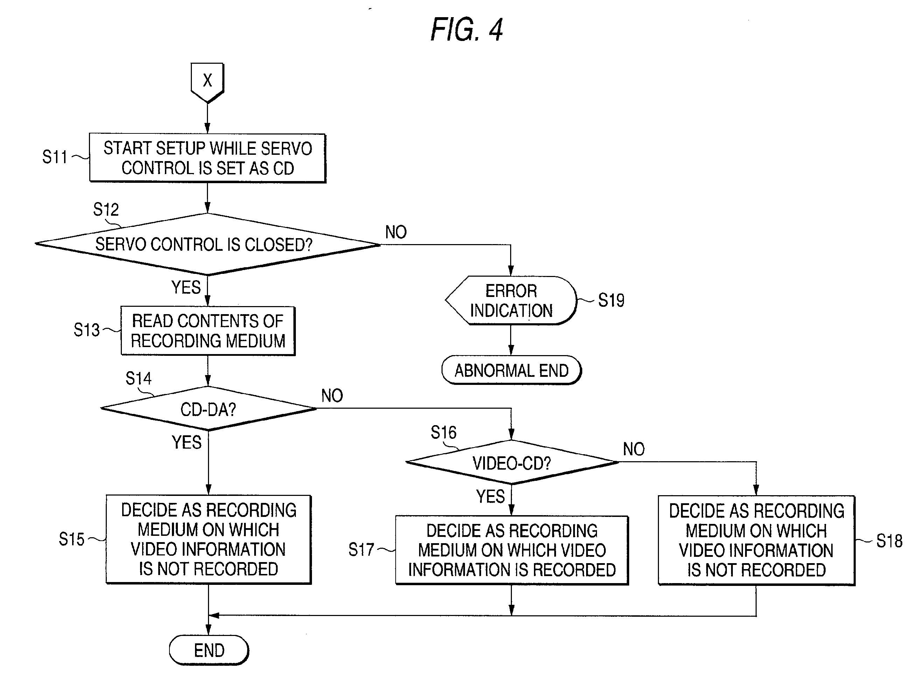

The operation and control of the multimedia player 3 which is a reproduction device of the thus configured in-vehicle reproduction display apparatus 1 will be described with reference to the flowcharts shown in Figs. 3 and 4. First, the user inserts a recording medium into the multimedia player 3 through the insertion slot 3b, and the recording medium is then positioned to the predetermined reproduction position by the transport mechanism 3e so as to be held by the clamper and the turntable. When the loading of the recording medium to the predetermined reproduction position is completed, the control unit 3P first assumes that the loaded recording medium is a DVD, and sets the above-mentioned servo controls as those required for reading information recorded on a DVD. Thereafter, a process of reading information recorded on the recording medium is started by the various servo controls performed by the servo control unit (step S1).

Next, the control unit 3P judges whether information recorded on the recording medium has been normally read by the servo controls set in step S1 or not (step 32). At this time, the LD emits a laser beam of a wavelength (a shorter wavelength) necessary for reading information recorded on a DVD. When the recording medium brought to the predetermined reproduction position is a recording medium (for example, a CD or the like) having an information recording density which is different from that of a DVD, or when the information recording plane of the recording medium is not opposed to the pickup 3G, a correct reflected light beam from the recording medium cannot be obtained. Therefore, the various servo controls cannot normally function and fail to be adequately closed. In view of such circumstances, it is judged whether the various servo controls are adequately closed or not. If the various servo controls are not adequately closed (step S2: NO), it is judged that the recording medium is a recording medium other than a DVD, or that the recording medium is not loaded in a normal state, and the control proceeds to step S11 shown in Fig. 4. If the various servo controls are adequately closed, or if information recorded on the recording medium is normally read by the laser beam emitted from the LD of the pickup 3G (step S2: YES), the kind of the loaded recording medium is judged as a DVD, and predetermined information recorded on the recording medium is read (step S3).

The predetermined information which is to be read in this step is information recorded in "Volume and File structure" zone in the volume pace of a DVD. In the case of a DVD-Video, for example, a file of "VIDEO_TS. IFO" which stores information of a VMG (Video Manager) and the like is recorded in the zone. In the case of a DVD-Audio, a file of "AUDIO_TS. IFO" which stores information of an AMG (Audio Manager) and the like is recorded in the zone. In the case of a DVD-ROM (Read Only Memory), both files of "VIDEO_TS.IFO" and "AUDIO_TS. IFO" are not recorded in the zone.

The predetermined information which has been read in step S3 is supplied to the signal process unit 3K through the RF amplifier 3I to be subjected to the signal process in the signal process unit 3K, and then supplied to the control unit 3P.

Thereafter, the control unit 3P judges the kind of the recording medium which is brought to the predetermined reproduction position in the multimedia player 3 (step S4). If it is judged that the recording medium broutht to the predetermined reproduction position is a DVD-Video, or if it is affirmed that a file of "VIDEO_TS.IFO" is stored in "Volume and File structure" zone in the volume space (step S4: YES), it is decided that the recording medium loaded on the multimedia player 3 is a recording medium on which at least video information to be displayed on the display screen 2a of the monitor 2 is recorded (step S5).

The control unit 3P supplies the signal indicative of the kind of the recording medium to the control unit 2b of the monitor 2 through the communication line 8, and stores the signal into the internal memory. Thereafter, the video information and the like recorded on the DVD-Video are reproduced. Specifically, the reproduction signal RF which is read by the pickup 3G is amplified by the RF amplifier 3I, a predetermined signal process is applied to the amplified signal in the signal process unit 3K, and the amplified signal is separated into a video signal and an audio signal.

The video signal is supplied to the video conversion unit 3M to be converted into video data which are to be displayed on the display screen 2a of the monitor 2, and then to the control unit 2b of the monitor 2 through the communication line 8 to be displayed as an image on the display screen 2a. The audio signal is supplied to the D/A conversion unit 3L to be converted into an analog audio signal, and then amplified to be output as sound from the loudspeaker 3N.

If it is judged in step S4 that the recording medium brought to the predetermined reproduction position is not a DVD-Video, or if it is affirmed that a file of "VIDEO_TS.IFO" is not stored in "Volume and File structure" zone in the volume space (step S4: NO), it is further judged whether the recording medium brought to the predetermined reproduction position is a DVD-Audio or not (step S6).

If it is judged that the recording medium is a DVD-Audio, or if it is affirmed that a file of "AUDIO_TS.IFO" is stored in "Volume and File structure" zone in the volume space (step S6: YES), it is decided that the recording medium loaded on the multimedia player 3 is a recording medium on which at least video information to be displayed on the display screen 2a of the monitor 2 is recorded (step S7).

The control unit 3P supplies the signal indicative of the kind of the recording medium to the control unit 2b of the monitor 2 through the communication line 8, and stores the signal into the internal memory. Thereafter, the video information and the like recorded on the DVD-Audio is reproduced.

Specifically, the reproduction signal RF which is read by the pickup 3G is amplified by the RF amplifier 3I, a predetermined signal process is applied to the amplified signal in the signal process unit 3K, and the amplified signal is separated into a video signal and an audio signal.

The video signal is supplied to the video conversion unit 3M to be converted into video data which are to be displayed on the display screen 2a of the monitor 2, and then supplied through the communication line 8 to the control unit 2b of the monitor 2 to be displayed as an image on the display screen 2a.

The audio signal is supplied to the D/A conversion unit 3L to be converted into an analog audio signal, and then amplified to be output as sound from the loudspeaker 3N.

If it is judged in step S6 that the recording medium brought to the predetermined reproduction position is not a DVD-Audio, or if it is affirmed that a file of "AUDIO_TS.IFO" is not stored in "Volume and File structure" zone in the volume space (step S6: NO), the recording medium brought to the predetermined reproduction position is neither a DVD-Video nor a DVD-Audio. Therefore, it is determined that the recording medium is not a recording medium on which at least video information to be displayed on the display screen 2a of the monitor 2 is recorded (for example, a DVD-ROM) (step S8).

The control unit 3P supplies the signal indicative of the kind of the recording medium to the control unit 2b of the monitor 2 through the communication line 8. Thereafter, the recording medium brought to the predetermined reproduction position is reproduced. In this case, since a video signal is not contained in the reproduction signal RF which is read by the pickup 3G and amplified by the RF amplifier 3I, the separation process in the signal process unit 3K is not performed, and the audio signal is converted into an analog audio signal by the D/A conversion unit 3L and then output from the loudspeaker 3N.

In the case where the recording medium is a DVD-ROM, for example, information to be output from the loudspeaker is not recorded on the recording medium as well, and hence the recording medium is compulsively ejected by the transport mechanism 3e.

If the various servo controls fail in step 32 to be adequately closed (step S2: NO), the control proceeds to step S11 shown in Fig. 4 in which the control unit 3P cancels the servo controls that have been set in order to read information recorded on a DVD, and sets servo controls required for reading information recorded on a CD. Thereafter, a process of reading information recorded on the recording medium is started by the various servo controls performed by the servo control unit 3J.

Next, the control unit 3P judges whether or not information recorded on the recording medium is normally read by the servo controls set in step S11 (step S12). At this time, the LD emits a laser beam of a wavelength necessary for reading information recorded on a CD (namely, a wavelength which is longer than that necessary for reading information recorded on a DVD).

If the various servo controls are not adequately closed (step S12: NO), it is judged that the recording medium is in a state where it is not normally loaded, such as that where the recording medium is not brought to the predetermined reproduction position in the state where the information recording plane of the recording medium is opposed to the pickup 3G. Then, processes such as those of displaying an error indication on the display unit 3d of the operation panel 3a, and compulsively ejecting the recording medium brought to the predetermined reproduction position, by the transport mechanism 3e are performed (step S19).

If the various servo controls are adequately closed, or if information recorded on the recording medium is normally read by the laser beam emitted from the LD of the pickup 3G (step S12: YES), the kind of the loaded recording medium is judged as a CD, and predetermined information recorded on the recording medium is read (step S13).

The predetermined information which is to be read in this step is TOC information which is recorded in the lead-in area of the CD. In the case of a CD-DA, the whole TOC information consists of information related to recording tracks of audio signals, and, in the case of another CD (for example, a CD-ROM (Read Only Memory) or a Video-CD), the TOC information contains both information related to recording tracks of audio signals and that related to ROM data, or the whole TOC information consists of information related to recording tracks of ROM data. In the case of a Video-CD, information of track No. 1 contains information of one of "info.vcd" and "KARINFO.BIH".

The predetermined information which is read in step S13 is supplied to the signal process unit 3K through the RF amplifier 3I to be subjected to a signal process in the signal process unit 3K, and then supplied to the control unit 3P. Thereafter, the control unit 3P judges the kind of the recording medium which is brought to the predetermined reproduction position in the multimedia player 3 (step S14).

If it is judged that the recording medium brought to the predetermined reproduction position is a CD-DA, or if it is affirmed that the whole TOC information consists of information related to recording tracks of audio signals (step S14: YES), it is determined that the recording medium loaded on the multimedia player 3 is a recording medium on which video information to be displayed on the display screen 2a of the monitor 2 is not recorded (step S15).

The control unit 3P supplies the signal indicative of the kind of the recording medium to the control unit 2b of the monitor 2 through the communication line 8. Thereafter, information (audio signals) and the like which are recorded on the CD-DA, and which are not video information are reproduced. Specifically, the reproduction signal RF which is read by the pickup 3G is amplifiedby the RF amplifier 3I, a predetermined signal process is applied to the amplified signal in the signal process unit 3K, the amplified signal is supplied to the D/A conversion unit 3L to be converted into an analog audio signal, and then amplified to be output as sound from the loudspeaker 3N.

If it is judged in step S14 that the recording medium brought to the predetermined reproduction position is not a CD-DA, or if it is affirmed that the TOC information contains information related to recording tracks other than audio signals (step S14: NO), it is further judged whether the recording medium brought to the predetermined reproduction position is a Video-CD or not (step S16) . If it is judged that the recording medium is a Video-CD, or if it is affirmed that information of track No. 1 contains information of one of "info.vcd" and "KARINFO.BIH" (step S16: YES), it is determined that the recording medium loaded on the multimedia player 3 is a recording medium on which at least video information to be displayed on the display screen 2a of the monitor 2 is recorded (step S17).

The control unit 3P supplies the signal indicative of the kind of the recording medium to the control unit 2b of the monitor 2 through the communication line 8, and stores the signal into the internal memory. Thereafter, the video information and the like recorded on the Video-CD are reproduced. Specifically, the reproduction signal RF which is read by the pickup 3G is amplified by the RF amplifier 3I, a predetermined signal process is applied to the amplified signal in the signal process unit 3K, and the amplified signal is separated into a video signal and an audio signal.

The video signal is supplied to the video conversion unit 3M to be converted into video data which are to be displayed on the display screen 2a of the monitor 2, and then supplied through the communication line 8 to the control unit 2b of the monitor 2 to be displayed as an image on the display screen 2a. The audio signal is supplied to the D/A conversion unit 3L to be converted into an analog audio signal, and then amplified to be output as sound from the loudspeaker 3N.

If it is judged in step S16 that the recording medium brought to the predetermined reproduction position is not a Video-CD, or if it is affirmed that the TOC information contains information related to recording tracks other than audio signals and information of track No. 1 contains no information of "info.vcd" and "KARINFO . BIH" (step S16: NO), it is determined that the recording medium brought to the predetermined reproduction position is not a recording medium on which at least video information to be displayed on the display screen 2a of the monitor 2 is recorded (for example, a CD-ROM) (step S18).

The control unit 3P supplies the signal indicative of the kind of the recording medium to the control unit 2b of the monitor 2 through the communication line 8. Thereafter, the recording medium brought to the predetermined reproduction position is reproduced. In this case, since a video signal to be displayed on the display screen 2a of the monitor 2 is not contained in the reproduction signal RF which is read by the pickup 3G and amplified by the RF amplifier 3I, a reproduction process similar to that in the case of a CD-DA, namely the separation process in the signal process unit 3K is not performed, and the audio signal is converted into an analog audio signal by the D/A conversion unit 3L and then output as sound from the loudspeaker 3N.

In the case where the recording medium is a CD-ROM, for example, even information to be output from the loudspeaker 3N is not recorded on the recording medium, and hence a process similar to that in the case of a CD-DA is not performed and the recording medium is compulsively ejected by the transport mechanism 3e.

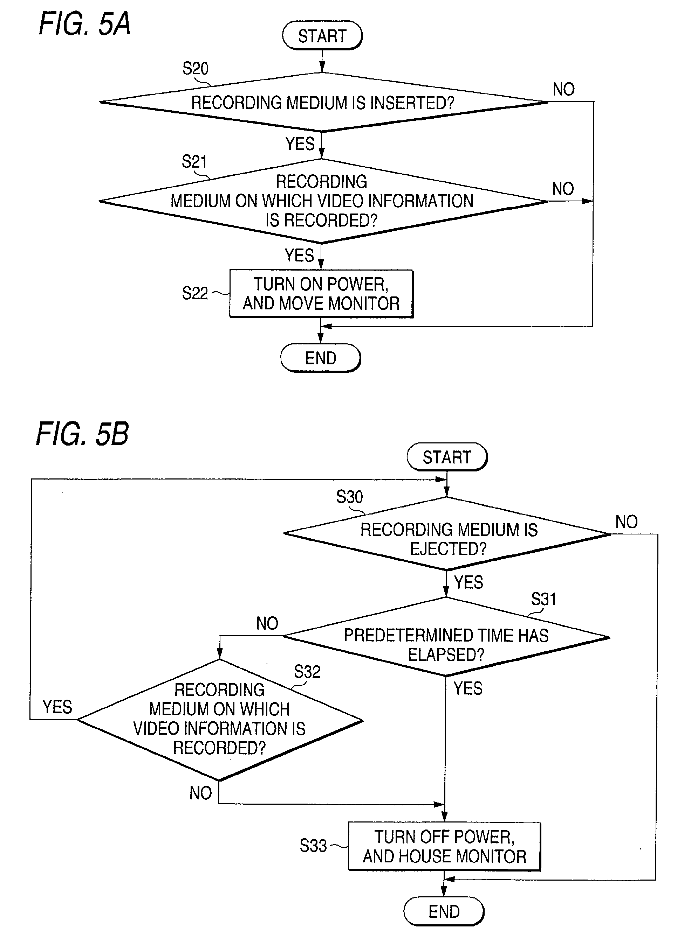

Next, a process of controlling reproduction display in the in-vehicle reproduction display apparatus 1 of the embodiment will be described with reference to the flowcharts shown in Figs. 5A and 5B. Fig. 5A is a flowchart showing a display control on the monitor 2 when a recording medium is loaded on the multimedia player 3, and Fig. 5B is a flowchart showing a control on the monitor 2 when the recording medium is ejected from the multimedia player 3.

First, the display control on the monitor 2 when a recording medium is loaded on the multimedia player 3 will be described with reference to the flowchart shown in Fig. 5A. The control unit 3P judges whether, with starting from the state where the monitor 2 is housed in the casing 5 and a recording medium is not loaded on the multimedia player 3, a recording medium which is inserted through the insertion slot 3b of the multimedia player 3 and carried to the predetermined reproduction position by the transport mechanism 3e is held by the clamper and the turntable or not (step S20).

If a recording medium is not brought to the predetermined reproduction position (step S20: NO), the control does not further proceed and waits for loading of a recording medium. If it is judged that a recording medium is brought to the predetermined reproduction position (step S20: YES), predetermined information of the recording medium is read by the pickup 3G. On the basis of the predetermined information, it is judged whether or not the recording medium brought to the predetermined reproduction position is a recording medium on which at least video information to be displayed on the display screen 2a of the monitor 2 is recorded (step S21).

If it is judged that the recording medium is not a recording medium on which at least video information to be displayed on the display screen 2a of the monitor 2 is recorded (step S21: NO), a reproduction process is performed on the recording medium brought to the predetermined reproduction position, while not supplying the signal indicative of the kind of the recording medium to the control unit 2b of the monitor 2. If it is judged that the recording medium is a recording medium on which at least video information to be displayed on the display screen 2a of the monitor 2 is recorded (step S21: YES), the signal indicative of the kind of the recording medium is stored into the internal memory, and the signal is supplied to the control unit 2b of the monitor 2 through the communication line 8.

The control unit 2b of the monitor 2 which receives the signal controls the moving mechanism 6 so as to move the monitor 2 housed in the casing 5 to the outside thereof, and turns on the power switch 7 (step S22).

The video data supplied from the multimedia player 3 are displayed on the display screen 2a, and the loudspeaker 3N outputs the audio signal.

Next, the display control of the monitor 2 in the case where the recording medium is ejected from the multimedia player 3 will be described with reference to the flowchart of Fig. 5B.

The control unit 3P of the multimedia player 3 judges whether, in the state where the monitor 2 is moved to the outside of the casing 5 and the video information of the recording medium loaded on the multimedia player 3 is displayed on the display screen 2a, the eject button of the operation panel 3a is operated by the user or not (step S30). If the eject button of the operation panel 3a is not operated by the user (step S30: NO) , the reproduction display operation is continued.

If the eject button of the operation panel 3a is operated by the user (step S30: YES), the reproduction of the recording medium which is in the predetermined reproduction position, and on which at least video information to be displayed on the display screen 2a of the monitor 2 is recorded is stopped, and the loaded state is cancelled.

The control unit 3P starts the timer to measure the predetermined time. The recording medium which has been released from the loaded state is ejected from the predetermined reproduction position by the transport mechanism 3e.

Next, it is judged whether the counting by the timer is ended or not (step S31). If the counting by the timer is not ended (step S31: NO), it is judged whether or not a recording medium which is newly brought to the predetermined reproduction position is a recording medium on which at least video information to be displayed on the display screen 2a of the monitor 2 is recorded (step S32).

If during the predetermined time it is failed to judge that the recording medium which is newly brought to the predetermined reproduction position is a recording medium on which at least video information to be displayed on the display screen 2a of the monitor 2 is recorded, or if it is judged that the recording medium is not a recording medium on which video information is recorded (step S32: NO), the counting by the timer is ended, a signal indicative of the end is supplied to the control unit 2b of the monitor 2 through the communication line 8, and the signal stored in the internal memory is cleared.

If a new recording medium is not brought to the predetermined reproduction position during the measurement of the predetermined time and the measurement of the predetermined time is ended (step S31: YES), the signal indicative of the end is supplied to the control unit 2b of the monitor 2 through the communication line 8, and the signal stored in the internal memory is cleared.

The control unit 2b of the monitor 2 turns off the power switch 7, and controls the moving mechanism 6 so as to house the monitor 2 in the raised state, into the casing 5 (step S33) .

By contrast, if during the predetermined time it is judged in step S32 that the recording medium which is newly brought to the predetermined reproduction position is a recording medium on which at least video information to be displayed on the display screen 2a of the monitor 2 is recorded (step S32: YES), the counting by the timer is ended, and the signal stored in the internal memory is again supplied to the control unit 2b of the monitor 2.

The control unit 2b of the monitor 2 which receives the signal maintains the on state of the power switch 7 of the monitor 2, and holds the monitor 2 to the raised state. Namely, during the period when the signal stored in the internal memory is not cleared, the on state of the power switch 7 of the monitor 2, and the raised state are maintained as they are. Then, the operation of reproducing the recording medium is started, and video information is displayed on the display screen 2a of the monitor 2.

As described above in detail, in the reproduction display apparatus of the embodiment, it is judged whether or not the recording medium loaded on the multimedia player 3 is a recording medium on which video information to be displayed on the display screen 2a of the monitor 2 is recorded, and, if it is judged that the recording medium is a recording medium on which such video information is recorded, the monitor that is not in an activated state is activated. When a recording medium (for example, a CD-DA) which does not require the use of the monitor is loaded, the monitor that is not in an activated state is not activated, and hence a cumbersome operation can be omitted.

As the reproduction display apparatus of the invention, the embodiment which is an in-vehicle reproduction display apparatus has been described. The invention is not restricted to this. For example, the invention may be applied also to, for example, a home reproduction display apparatus.

The reproduction display apparatus of the invention may be applied not only to a monitor which is moved inside and outside a case but also to a stationary monitor by controlling the power switch described in the embodiment.

In the embodiment described above, the multimedia player which is the reproduction device is a single player (in which a recording medium inserted through the insertion slot is transported as it is to the reproduction position and then reproduced) . The multimedia player may be of the type in which plural recording media are housed and a selected one of the recording media is taken out to be reproduced (the magazine type, or the type in which recording media are inserted one by one through an insertion slot to be housed in a housing unit in a player).

In the case where the multimedia player is a changer, a selected recording medium is transported from a magazine or a housing unit in which a plurality of recording media are housed, to a predetermined reproduction position by a transport mechanism of the changer, and a reproduction process is performed on the selected recording medium. In the case where the multimedia player is a changer, therefore, the recording medium loaded on the reproduction device means the selected recording medium, and the judgments such as that whether or not the recording medium is a recording medium on which video information is recorded are performed on the selected recording medium.

## Claims

1. A reproduction display apparatus comprising:
a display device that displays video information;
a reproduction device that reproduces a recording medium on which at least video information to be displayed on the display device is recorded; and
a control section which, when it is judged that a recording medium loaded on the reproduction device is a recording medium on which such video information is recorded, activates the display device that is not in an activated state.

2. A reproduction display apparatus comprising:
a display device that is disposed to be movable inside and outside a case fixed to a vehicle;
a reproduction device that reproduces a recording medium on which at least video information to be displayed on the display device is recorded;
a moving section which moves the display device to inside and outside of the case; and
a control section which, when it is judged that a recording medium loaded on the reproduction device is a recording medium on which such video information is recorded, controls the moving section to move the display device that is housed in the case to outside of the case.

3. A reproduction display apparatus according to claim 2, wherein, when it is failed to again judge that the recording medium loaded on the reproduction device is a recording medium on which such video information is recorded during a predetermined time period after loading of the recording medium on which such video information is recorded is cancelled, the control section controls the moving section to move the display device that is moved outside of the case to inside of the case.

4. A reproduction display apparatus according to claim 1, wherein the reproduction device is capable of reproducing a recording medium on which only information other than such video information is recorded.

5. A reproduction display apparatus according to claim 2, wherein the reproduction device is capable of reproducing a recording medium on which only information other than such video information is recorded.

6. A reproduction display method for a reproduction display apparatus having a display device that displays video information; and a reproduction device that reproduces a recording medium on which at least video information to be displayed on the display device is recorded, the method comprising :
judging whether or not a recording medium loaded on the reproduction device is a recording medium on which video information is recorded;
activating the display device that is not in an activated state, when it is judged that the recording medium is a recording medium on which video information is recorded; and
displaying the video information recorded on the recording medium, on the activated display device.

7. A reproduction display method for a reproduction display apparatus having a display device that is disposed to be movable inside and outside a case fixed to a vehicle; and a reproduction device that reproduces a recording medium on which at least video information to be displayed on the display device is recorded, the method comprising:
judging whether or not a recording medium loaded on the reproduction device is a recording medium on which video information is recorded;
moving the display device that is housed in the case, to outside of the case, when it is judged that the recording medium is a recording medium on which video information is recorded; and
displaying the video information recorded on the recording medium, on the moved display device.
